# EUROPEAN PATENT APPLICATION

(11) **EP 4 761 207 A1**
(43) Date of publication of application: **17.06.2026**
(21) Application number: 25222348.2
(22) Date of filing: 10.12.2025
(51) Int. Cl.: H04L 41/40

(54) **NETWORK FUNCTION CAPACITY ENGINE(S) FOR MANAGING SERVICE ROUTING BASED ON SESSION TYPE CAPACITIES OF RESPECTIVE NETWORK FUNCTIONS**

(30) Priority: 10.12.2024 US 202418976056
(71) Applicant: Oracle International Corporation, Redwood Shores, CA 94065 (US)
(72) Inventor: KRISHAN, Rajiv, Redwood City, 94065 (US)
(74) Representative: D Young & Co LLP

(57) **Abstract**

Various embodiments of the present technology generally relate to systems and methods for providing a network function (NF) capacity engine. In an example, the NF capacity engine executing on a NF instance, publishes a plurality of session type capacities of the NF instance. The session type capacities include a first session type capacity indicating a storage availability of the NF instance for a first session type and a second session type capacity indicating a storage availability of the NF instance for a second session type. When a network repository function (NRF) receives a discovery request including a plurality of discovery parameters associated with a first session from a consumer NF, the NF capacity engine identifies an NF profile based on the first session type capacity matching the discovery parameters and transmits discovery response identifying the NF instance and containing the first session type capacity to the consumer NF.

## Description

### FIELD

Various embodiments of the present technology generally relate to network function communication within networks. More specifically, embodiments of the present technology relate to systems and methods for providing a network function (NF) capacity engine for managing service routing within a communication network based on session type capacities of respective NFs.

### BACKGROUND

Communication networks, such as 4G and 5G, have become the backbone of modern communication, revolutionizing how people and devices connect across the globe. These technologies provide the essential infrastructure for high-speed, reliable wireless communication, enabling everything from everyday smartphone use to complex industrial applications. 4G networks laid the foundation by introducing fast data transfer rates and improved mobile internet experiences. Now, with the advent of 5G, the world is witnessing unprecedented advancements in speed, capacity, and low-latency communication, paving the way for transformative applications like autonomous vehicles, smart cities, and the Internet of Things (IoT). These networks collectively form the cornerstone of modem communication, driving innovation and shaping the future of global connectivity.

In view of the growing reliance on 4G and 5G networks, sessions are often balanced between different sets of NFs to ensure robust session resiliency. This approach involves dynamically distributing sessions across multiple NF instances, allowing the network to maintain continuity even if one NF set experiences issues or becomes temporarily unavailable. By leveraging this redundancy, the network can instantly reroute traffic to a backup NF, minimizing disruption and maintaining performance standards. Such load balancing is essential for meeting the high reliability, low latency, and uninterrupted service demands of 5G, as it helps ensure seamless failover and optimized resource utilization, thereby enhancing the overall resilience and dependability of the network.

However, conventional load balancing approaches in 4G and 5G networks often encounter significant limitations. One issue arises when an NF set becomes overloaded or experiences an imbalance in session distribution, particularly if other NF instances in the same locality fail. This can lead to a domino effect where localized issues escalate into broader set or even regional failures, caused by instability in session management. The problem is further compounded in scenarios where multiple consumer functions, such as Session Management Functions (SMFs), are present in the same region but distributed across different localities. If some of these SMF instances have connectivity issues with certain producer NFs, like Policy Control Functions (PCFs) within specific NF sets, the risk of service disruptions increases. These connectivity and distribution challenges make it difficult to efficiently balance sessions, and this misalignment not only strains network resources but can also compromise overall system stability.

Accordingly, there has been identified room for improvements in systems and techniques for session balancing frameworks within communication networks. In particular, there has been identified room for development in relation to an NF capacity engine that determines an NF's specific capacity for various session types.

The information provided in this section is presented as background information and serves only to assist in any understanding of the present disclosure. No determination has been made and no assertion is made as to whether any of the above might be applicable as prior art with regard to the present disclosure.

### OVERVIEW

Particular aspects are set out in the appended independent claims. Various optional embodiments are set out in the dependent claims.

Technology is disclosed herein for systems and techniques for providing an NF capacity engine and one or more of its related functions. As described in greater detail below, the NF capacity engine determines a session type capacity for different session types handled by a respective NF instance. Once the session type capacities for the NF instance are computed, the NF capacity engine publishes the session type capacities. This may include generated vendor-specific extensions within a respective NF profile or NFservice profile of the NF instance. Upon publication, an NF profile database at a Network Repository Function (NRF) is updated to reflect the session type capacities of the NF instance for use during subsequent service routing.

In some embodiments, the NF capacity engine identifies a discovery request received by the NRF. The discovery request includes discovery parameters for a service sought to be routed by a consumer NF. Based on the discovery parameters, which outline requirements for the respective service, such as NF type, locality, and session type, the NF capacity engine identifies the NF instance has having session type capacity to handle the requesting service. Once identified, the NF capacity engine generates a discovery response indicating the identified NF instance and respective session type capacity. The discovery response is transmitted to the consumer NF, which responsive to receiving the discovery response performs NF selection based on the identified NF instance(s) and respective session type capacities.

This Overview is provided to introduce a selection of concepts in a simplified form that are further described below in the Detailed Description. It may be understood that this Overview is not intended to identify key features or essential features of the claimed subject matter, nor is it intended to be used to limit the scope of the claimed subject matter.

### BRIEF DESCRIPTION OF THE DRAWINGS

The accompanying drawings, which are incorporated into and constitute a part of this specification, illustrate one or more certain aspects and, together with the description of the example, serve to explain the principles and implementations of the certain examples.
Figure 1 illustrates an example operational environment for a 5G network in which one or more features of an NF capacity engine can be implemented, according to an embodiment herein;
Figure 2 illustrates an example environment in which two NF consumer groups distribute service routing between multiple NF sets, according to an embodiment herein;
Figure 3 illustrates an operational environment 300 including an NF capacity engine, according to an embodiment herein;
Figure 4 provides an example NF capacity engine process, according to an embodiment herein;
Figure 5 illustrates an example operational flow showing service routing based on session type capacity, according to an embodiment herein;
Figure 6 illustrates another example operational flow in which a NF capacity engine is leveraged for service routing, according to an embodiment herein; and
Figure 7 shows an example computing device suitable for providing an NF capacity engine and its related functions, according to an embodiment herein.

Some components or operations may be separated into different blocks or combined into a single block for the purposes of discussion of some of the embodiments of the present technology. Moreover, while the technology is amenable to various modifications and alternative forms, specific embodiments have been shown by way of example in the drawings and are described in detail below. The intention, however, is not to limit the technology to the particular embodiments described. On the contrary, the technology is intended to cover all modifications, equivalents, and alternatives falling within the scope of the technology as defined by the appended claims.

### DETAILED DESCRIPTION

In a 5G network, when consumer NFs, such as SMFs, perform NF selection for service routing, the process involves identifying a suitable producer NF, like a PCF, an Access and Mobility Management Function (AMF), or a Unified Data Management (UDM), depending on the service. The selection is primarily driven by the producer NF's capacity to handle the requested services effectively. This capacity is determined by available resources at the producer NF, such as processing power, memory availability, and current load. By assessing these factors, the consumer NF ensures that the selected producer NF can deliver optimal performance, maintain low latency, and uphold the quality of service (QoS) standards. This capacity-based approach enhances network efficiency and ensures reliable service delivery.

One shortcoming, however, of the conventional capacity-based approach is that the capacity provided by the producer NF and used by the consumer NF for NF selection is represented as a single aggregated metric. This simplified representation does not account for the differences in resource intensity among various session types in the NF's current workload. As a result, the evaluation of NF capacity overlooks the nuanced demands imposed by different types of sessions. Each session type has distinct characteristics, with some being more resource-intensive while others require significantly fewer resources to manage and process.

Workload diversity in a 5G network can have significant implications for resource utilization. For example, some workloads, such as those associated with multimedia services, involve high data throughput and complex signaling processes, which are inherently resource-intensive. In contrast, other workloads, such as lightweight control plane interactions or lowpriority administrative tasks, demand minimal processing and memory resources. The varying levels of resource consumption are not reflected in the conventional capacity metric, leading to a potential imbalance in how workloads are distributed across producer NFs.

For example, consider the case of an IMS (IP Multimedia Subsystem) session managed by a PCF instance. IMS sessions often involve intricate signaling, high transaction volumes, and stringent quality of service (QoS) requirements, making them considerably resource-intensive. On the other hand, an administrative (admin) session-such as one initiated by a network operator for monitoring or configuration-might consume only a small fraction of the PCF instance's resources since an admin session involves lighter signaling and minimal data handling. Despite these differences, current NF capacity evaluation approaches treat both session types equally, without accounting for the relative resource intensity of each.

This lack of differentiation means that producer NFs might appear fully or partially loaded based on the aggregate number of sessions, even if the workload composition varies significantly in resource intensity. This approach can lead to inefficient resource allocation, where highly resource-intensive sessions are assigned to NFs already burdened with similar workloads, while lighter sessions are assigned to less utilized NFs without maximizing their potential. The inability of NFs, both consumer NFs and producer NFs, to distinguish between different session types within the capacity metric underscores a critical gap in how NF capacity is currently evaluated. These challenges are further compounded in scenarios where a consumer NF considers only the overall capacity of an NF set, disregarding the unique storage demands of individual producer NFs, such as in load balancing scenarios.

Accordingly, conventional approaches to evaluating NF capacity introduce several shortcomings into session management and service routing. As noted above, conventional approaches treat all sessions as equal in terms of resource consumption, overlooking the fact that different session types impose varying demands on processing power, memory, and storage. As a result, NFs managing a disproportionate number of resource-intensive sessions may be mistakenly evaluated as underloaded based on the number of sessions, while in reality, they are nearing their operational limits. This can lead to inefficient resource allocation, with heavy workloads being directed to NFs already handling resource-intensive tasks, exacerbating their strain. Conversely, NFs managing lighter, less resource-intensive sessions may appear overburdened by the metrics but still have unused capacity to handle more demanding workloads. This lack of granularity in assessing workload composition can cause imbalanced load distribution, reduce overall network performance, and increase the risk of overload conditions, resulting in degraded service quality and instability.

To address at least these issues, an example NF capacity engine and its related functions are provided herein. As will be described in greater detail below, the NF capacity determines a respective producer NF's capacity on a per session type basis. For example, a NF capacity engine of a PCF instance evaluates its current workload, determining a number of admitted sessions having a first session type and a number of admitted sessions having a second session type. Based on the number of admitted sessions having different session types, the NF capacity engine then determines the capacity of the PCF instance for each session type. Once determined, NF capacity engine publishes the session type capacities for the producer NF. As will be described in greater detail below, the NF capacity engine may use vendor-specific extensions, such as those defined by 3GPP Technical Specification (TS) 29.500, section 6.6.3, with an NF profile associated with the producer NF to publish the session type capacities.

Once published, the session type capacities can be used for NF selection and subsequent service routing. In an example, when the NRF receives a discovery request, an NF capacity engine of the NRF may identify NFs having capacities for the specific session type identified in the discovery request. Then, in a discovery response, the NF capacity engine identifies respective producer NFs having capacity to handle the respective session type. In another example, when the consumer NF performs profile discovery, an NF capacity engine running on the consumer NF may parse the NF profiles to determine which producer NFs have capacity to handle the respective session type required for a particular service.

By accounting for the nuanced resource intensity of each type of session, the NF capacity engine allows for efficient resource allocation and balanced workload distribution across producer NFs having appropriate capacity for specific session types, thereby minimizing bottlenecks, reducing latency, and enhancing overall throughput of the network. Moreover, the NF capacity engine prevents overloading individual NFs, thereby extending their lifecycle and reducing the likelihood of failures. Furthermore, it ensures underutilized resources are effectively leveraged, promoting cost efficiency and scalability. Balanced workloads also enhance service reliability and user satisfaction by maintaining consistent performance even under peak loads. Ultimately, the NF capacity engine fosters a more agile, responsive, and robust network infrastructure.

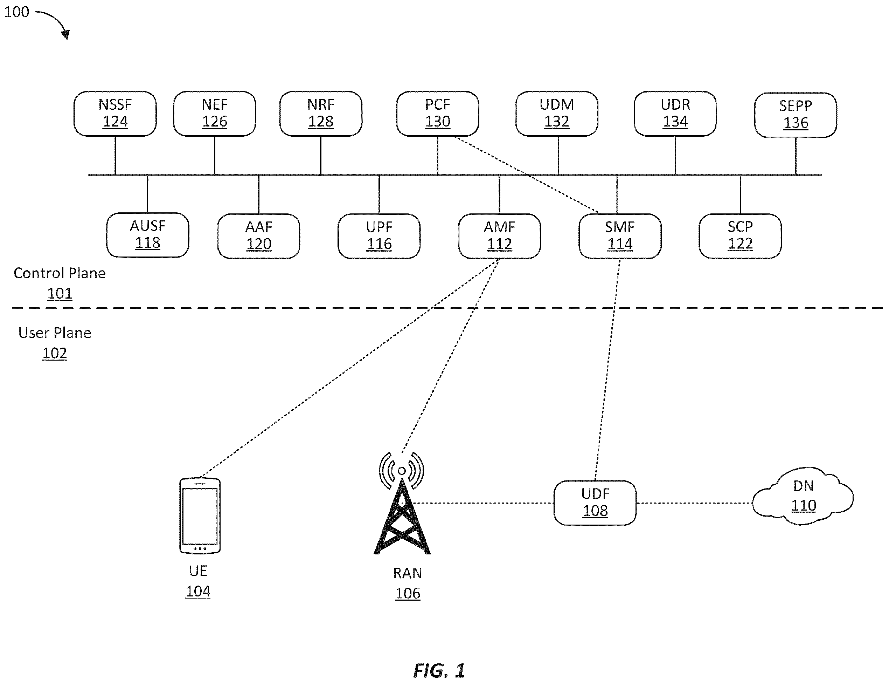

Turning now to the Figures, **Figure** 1 illustrates an example operational environment for a 5G network 100 in which one or more features of an NF capacity engine can be implemented, according to an embodiment herein. The example 5G network 100 is a 5G core (5GC) cellular network implementing 3GPP (3rd Generation Partnership Project) communication standards, although the present disclosure may apply to other communication networks. It should be appreciated that while the following discussion focuses on a 5G network, the NF capacity engine may also operate within other communication networks. For example, the NF capacity engine may be employed within a 4G network that is enabled to use 5G resources.

The 5G network 100, its components, and their sub-components may be implemented via computers, servers, hardware and software modules, or other system components. The components of the 5G network 100 and its subcomponents, or the physical devices implementing them, may be co-located, remotely distributed, or any combination thereof. The elements of 5G network 100 may include components hosted or situated in the cloud and implemented as software modules potentially distributed across one or more server devices or other physical components.

The 5G network 100 is divided into two fundamental planes: a control plane 101 and a user plane 102, each serving distinct yet interdependent roles. The control plane 101 is responsible for managing the signaling and control information necessary to establish, modify, and terminate communication sessions. The control plane 101 handles tasks such as authentication, policy enforcement, and mobility management. As such, the control plane 101 is crucial for orchestrating and controlling the NFs, ensuring efficient and secure connectivity. On the other hand, the user plane 102 deals with the actual data transmission- the movement of user data between devices and applications. It is optimized for high-throughput, low-latency data delivery, and is designed to efficiently transport user traffic. The separation of the control plane 101 and user plane 102 in the 5G network 100 enhances scalability, flexibility, and enables network slicing, allowing tailored configurations to meet diverse service requirements. Together, these planes 101 and 102 form a cohesive architecture that empowers the 5G network 100 to deliver unprecedented speed, reliability, and versatility for a wide array of applications and services.

As noted above, the user plane 102 of the 5G network 100 operates in tandem with the control plane 101 to deliver efficient and seamless data transmission. For example, as illustrated, when a User Equipment (UE) 104, which could be a smartphone or any other device, initiates a communication the user plane 102 handles the actual user data traffic. When the UE 104 initiates communication, the Radio Access Network (RAN) 106 comes into play, managing the wireless connection between the UE 104 and the network 100, in particular the UE 104 and the Access and Mobility Management Function (AMF) 112. The RAN 106 acts as the bridge between the user plane 102 and the control plane 101, facilitating the establishment of communication sessions. As data travels through the RAN 106, it encounters the User Data Function (UDF) 108, which plays a pivotal role in processing and optimizing user data. The UDF 108 is responsible for tasks such as traffic optimization, content caching, and data transformation, enhancing the efficiency of data delivery.

The UDF 108 provides the data to the Data Network (DN) 110, which could represent the broader internet or a specific network service. The DN 110 processes and delivers the user data to its intended destination, completing the journey initiated by the UE 104. The collaborative operation of the user plane 102, UE 104, RAN 106, UDF 108, and DN 110 ensures that data is transmitted reliably and efficiently, meeting the high-performance expectations of 5G networks. As those skilled in the art readily appreciate, the separation of user plane 102 and control plane 101 allows for flexible network configurations and optimizations, contributing to the enhanced capabilities of the 5G ecosystem.

As noted above, when the UE 104 initiates a communication within the 5G network 100, the AMF 112 coordinates the interaction. For example, when the UE 104 initiates communication or moves within the 5G network 100, it sends signaling messages to the AMF 112. The AMF 112 is responsible for tasks such as authentication, authorization, and mobility management. Upon receiving the signaling messages from the UE 104, the AMF 112 validates the user's identity, checks for necessary permissions, and establishes the necessary context for the session. The AMF 112 coordinates with other network functions, such as the Session Management Function (SMF) 114 and the User Plane Function (UPF) 116, to ensure the seamless setup and management of communication sessions. The interaction with the control plane 101 enables the UE 104 to access network services, adhere to established policies, and maintain continuous connectivity while benefiting from the advanced capabilities and optimizations offered by the 5G network architecture.

The control plane 101 includes example components, nodes, or NFs. As illustrated, the control plane 101 includes the AMF 112, the SMF 114, the UPF 116, an Authentication Server Function (AUSF) 118, an Authentication and Authorization Function (AAF) 120, Service Communications Proxy (SCP) 122, a Network Slice Selection Function (NSSF) 124, Network Exposure Function (NEF) 126, a Network Repository Function or NF Repository Function (NRF) 128, a Packet Core Function (PCF) 130, a Unified Data Management (UDM) 132, Unified Data Repository (UDR) 134, and a Security Edge Protection Proxy (SEPP) 136. The selection of NFs 112-136 depicted in the 5G network 100 is pby way of example, and some of the NFs 112-136 may be excluded, or other NFs added to the collection, without departing from the scope of this disclosure. The various NFs 112-136 execute various operations to provide communication services to UEs, such as the UE 104, that connects to the 5G network 100. A network node or NF that provides service is referred to herein as a Producer NF, while a network node or NF that consumes services is referred herein to as a Consumer NF. A network function can be both a Producer NF and a Consumer NF depending on whether it is consuming or providing service.

The NFs 112-136 of the 5G network 100 exchange various communications in the course of providing network services. The communications may include messaging to establish or end secured communication channels, such as transport layer security (TLS) handshakes, as well as service-based interface (SBI) communications. As used herein, SBI is the term given to the application programming interface (API) based communication that can take place between two NFs within the 5G SBA. A given NF can utilize an API call over the SBI to invoke a particular service or service operation. Communications between NFs 112-136 may be performed over network links and communication channels of the 5G network 100 that are not explicitly depicted in Figure 1.

When the UE 104 initiates communication within the 5G network 100, various network functions often operate in pairs, where one NF acts as the producer ("the Producer NF"), generating or providing specific services or information, and the other NF acts as the consumer (the "Consumer NF"), utilizing or consuming the produced services or information to complete service requests. For instance, consider the interaction between the SMF 114 and the PCF 130. The SMF 114, as the Consumer NF, initiates service requests related to session establishment, modification, or termination for UE sessions, such as for the UE 104. The SMF 114 communicates these requests to the PCF 130, acting as the Producer NF, which performs functions related to session management, Quality of Service (QoS) enforcement, and access control. The PCF 130 processes the requests from the SMF 114, enforces QoS policies, manages session establishment and modification, and ensures appropriate access control based on network policies and conditions. Through this producer-consumer interaction, the SMF 114 and PCF 130 collaborate to deliver efficient and reliable service within the 5G network architecture.

As those skilled in the art readily appreciate, various NFs may act as producer NFs and consumer NFs. For example, a producer NF may be or include the PCF 130, the SMF 114, the UDR 134, a charging function (CHF), Binding Support Function (BSF) (not shown), or a Network Data Analytic Function (NWDAF) (not shown). depending on the operation and the service request. A consumer NF may be or include the UE 104, a service capability function (SCF) (not shown), the SCP 122, the SMF 114, the AMF 112, the NEF 126, a security edge protection proxy (SEPP) 136, the UDR 134, or a charging function (CHF), depending on the operation and the service request.

As noted above, the SMF 114 is responsible for routing and coordinating service to various NFs that facilitate session management. Acting as an intermediary, the SMF 114 facilitates efficient communication and data flow by dynamically directing session-related requests and updates to the appropriate NFs, such as the PCF 130, the AMF 112, the UDM 132, the NSSF 124, the NEF 126, and/or the AUSF 118. For example, during session creation or modification, the SMF 114 engages the PCFs 130 to apply policy rules and QoS parameters tailored to the user's service profile. This routing capability allows the SMF 114 to seamlessly integrate session management processes with other critical NFs, ensuring that network resources are allocated efficiently and that services adhere to predefined policies.

To efficiently route service requests for session management, the SMF 114 identifies NFs that align with specific requirements. These requirements encompass factors such as geographical locality, ensuring that the selected NF is sufficiently close to minimize latency; the type and capabilities of the NF, confirming it supports the required functionalities; and the NF's capacity to manage additional workloads without degrading performance. Among these, capacity plays a crucial role in the SMF's 114 selection process. Capacity refers to the NF's ability to handle service requests based on its real-time resource availability, such as storage availability within a respective database, processing power for executing policies, and network bandwidth. By prioritizing NFs with adequate capacity, the SMF 114 ensures that service requests are directed to NFs capable of sustaining the session demands efficiently. It should be appreciated that while the discussion herein focuses on service routing by the SMF 114 to NFs, such as the PCF 130, other consumer-producer NF pairs are contemplated herein, such as PCF 130 routing to a BSF, the PCF 130 routing to a Network Data Analytics Function (NwDAF; not shown), and the AMF 112 to the SMF 114 selection.

As outlined above, a limitation of current approaches to service routing and NF selection lies in the use of a simplified producer NF capacity metric for service routing. Traditionally, the capacity of a producer NF, such as the PCF 130, is represented by a single aggregated value based on the overall number of admitted sessions the NF is handling. While conventional capacity provides a general indication of the NF's workload, it fails to consider the variability in resource demands between different types of sessions. Some sessions may be significantly more resource-intensive than others, requiring more processing power, memory, or bandwidth. As a result, relying solely on the conventional capacity metric can lead to inaccurate assessments. For instance, the SMF 114 might select a PCF 130 that appears to have ample capacity based on the overall session count but is, in reality, nearing its limits due to the high resource demands of its existing, admitted sessions. This shortfall in granularity and precision can lead to suboptimal NF selection and potential performance issues.

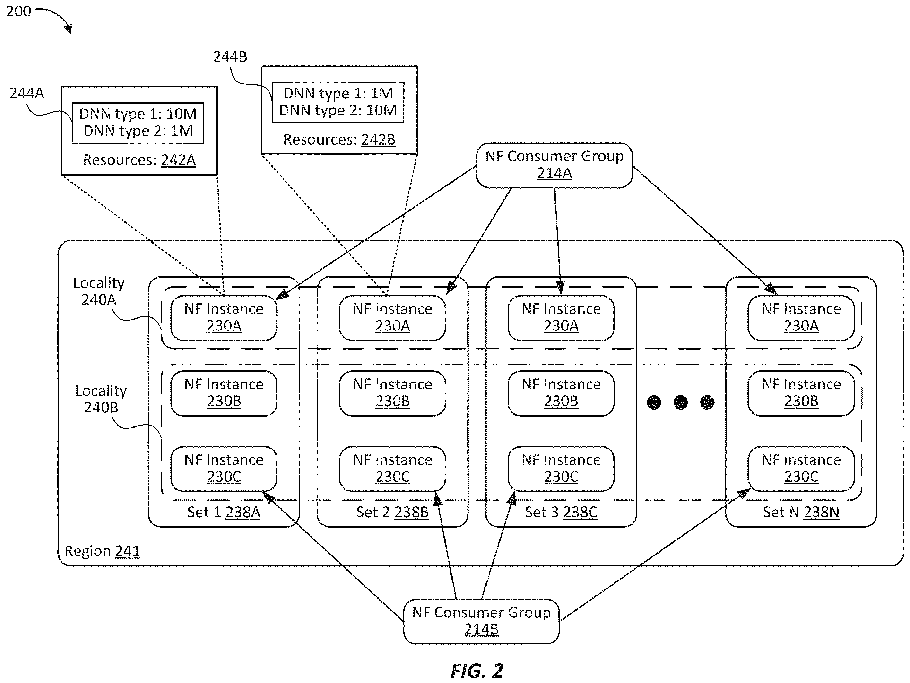

To further highlight the issues caused by conventional capacity metrics, **Figure** 2 provides an example environment 200 in which two NF consumer groups 214A-B distributes service routing between multiple NF sets 238A-N, according to an embodiment herein. For ease of illustration, Figure 2 is described in the context of a 5G network environment, such as the 5G network 100, however, it should be appreciated that the following is equally applicable to other networks, such as a 4G network utilizing 5G network functions.

In the illustrated environment 200, the consumer NF groups 214A-B, which may be groups of SMFs 114, actively route service requests and updates to multiple NF sets 238A-N. As shown, each of the NF sets 238A-N includes multiple NF instances 230A-C, which may be PCF instances. As used herein, a PCF instance, which is also referred to herein as a PCF generally, is a single, operational software or hardware deployment of the PCF 130, running in a particular location or cluster, with its own resources, capacity, and operational state. As such, each of the NF instances 230A-C within a respective NF set 238A-N contains its own resources, meaning that each NF instance 230A-C illustrate has it's a respective capacity to accept services from the NF consumer groups 214A-B.

Each consumer NF group 214A-B routes services to the NF instances 230A-C within a specified locality 240A-B to optimize service latency, maintain high performance, and align with regional resource allocation strategies. That is, when handling requests, the consumer NF groups 214A-B prioritizes NF instances 230A-C within the same geographic locality to minimize the distance between network elements, reducing transmission delays and ensuring low-latency communication for time-sensitive operations. For example, the consumer NF group 214A routes services NF instances 230A located in the locality 240A, while the consumer NF group 214B routes services to NF instances 230B located in the locality 240B. This localized routing helps to balance network loads efficiently within a specific locality 240A-B, preventing overburdening of NF instances 230A-C in distant locations and ensuring better resource utilization across the network. Additionally, routing to NF instances within a particular locality supports adherence to region-specific policies, regulatory requirements, or service level agreements (SLAs) that may dictate where user data and services are processed.

To ensure flexibility, resiliency, and efficiency within the network 100, the NF consumer groups 214A-B strategically distribute service loads across multiple NF sets 238A-N within a respective locality 240A-B. Each NF set 238A-N contains multiple NF instances 230A-C, which replicate session information within the same NF set. This redundancy ensures that if one NF instance 230A-C within a respective NF set 238A-N fails, the remaining NF instances in the set retain the session information and can continue processing requests without disruption. However, to mitigate the risk of a complete NF set 238A-N becoming unavailable-whether due to localized failures or other disruptions-NF consumer groups 214A-B further enhance resiliency by routing service requests to NF instances 230A-C deployed across multiple NF sets 238A-N within the same locality 240A-B. This distribution enables SMF groups 214A-B to dynamically allocate service loads, ensuring balanced utilization across the network. By leveraging this multiset deployment, the network can seamlessly redirect service requests to an available NF instance 230A-C from a different NF set within the same locality 240A-B, maintaining uninterrupted service and safeguarding against both instance-level and set-level failures. This layered approach to resiliency combines intra-set redundancy with inter-set failover to deliver robust and reliable service continuity.

Operators also carefully balance the capacity allocated to each NF set 238A-N within a region 241 to maximize efficiency. Rather than provisioning each NF set 238A-N to handle 100% of the regional load-an approach that would lead to significant resource wastage-each NF set 238A-N is configured with a limited capacity that, collectively, supports the region's 241 total service demands. This distributed capacity model reduces redundant resource allocation while ensuring sufficient failover capacity in the event of individual NF instance 230A-C failures. By dynamically selecting and routing requests among NF sets 238A-N, the consumer NF groups 214A-B ensure both operational efficiency and robust service delivery in a multi-instance, multiset environment 200.

As noted above, operators allocate a certain amount of capacity for each NF instance 230A-C. That is, based on an amount of resources 242A-B of a respective NF instance 230A-C, operators may determine that a respective NF instance 230A-C can accommodate a certain number of sessions. For example, operators may set the capacity of the NF instances 230A as 20 million sessions based on the resources 242A-B of the NF instances 230A. Thus, when the NF consumer group 214A is routing service requests/updates, the NF instances 230A of the NF set 1 238A and the NF set 2 238B may be selected on their respective capacity to handle additional sessions.

As illustrated, however, the NF instance 230A from NF set 1 238A and the NF instance 230A from the NF set 2 238B have different actual capacities despite indicating the same capacity under conventional approaches. As indicated by the resources 242A, the NF instance 230A of the NF set 1 238A has 11 million admitted sessions and based on its predefined storage availability to accept 20 million sessions, has a capacity of 45%. The NF instance 23A of the NF set 2 238B also has 11 million admitted sessions out of its predefined storage availability of 20 million session, thus also having a capacity of 45%. However, the distribution of session type between the two resources 242A-B is different, meaning that the resource consumption of the resources 242A is different than the resource consumption of the resources 242B. As such, the actual availability of the resources 242A to accept additional sessions is different than the actual availability of the resources 242B, despite the conventional capacity metric indicating that both NF instances 230A have the same capacity of 45%.

For example, the resources 242A indicate that NF instance 230A, belonging to NF set 1 238A, is currently handling 10 million admitted sessions associated with Data Network Name (DNN) type 1 and 1 million admitted sessions with DNN type 2. In contrast, the resources 242B indicate that NF instance 230B, part of NF set 2 238B, is managing 1 million DNN type 1 sessions and 10 million DNN type 2 sessions. If DNN type 1 sessions are resource-intensive, such as IMS-based communication sessions, while DNN type 2 sessions are lightweight, such as administrative or signaling sessions, then NF instance 230A in NF set 1 238A has significantly fewer available resources compared to NF instance 230B in NF set 2 238B. Despite this, if the NF consumer group 214A routes additional services to NF instance 230A based solely on its overall capacity metric suggesting availability, it risks overloading NF instance 230A due to the high resource demands of the existing DNN type 1 sessions. Furthermore, if session types vary in their life cycles-such as long-lived sessions remaining active for extended periods-an uneven distribution of these sessions across NF sets 238A-N can exacerbate congestion or overload issues within a specific region 241, further compromising network efficiency and performance.

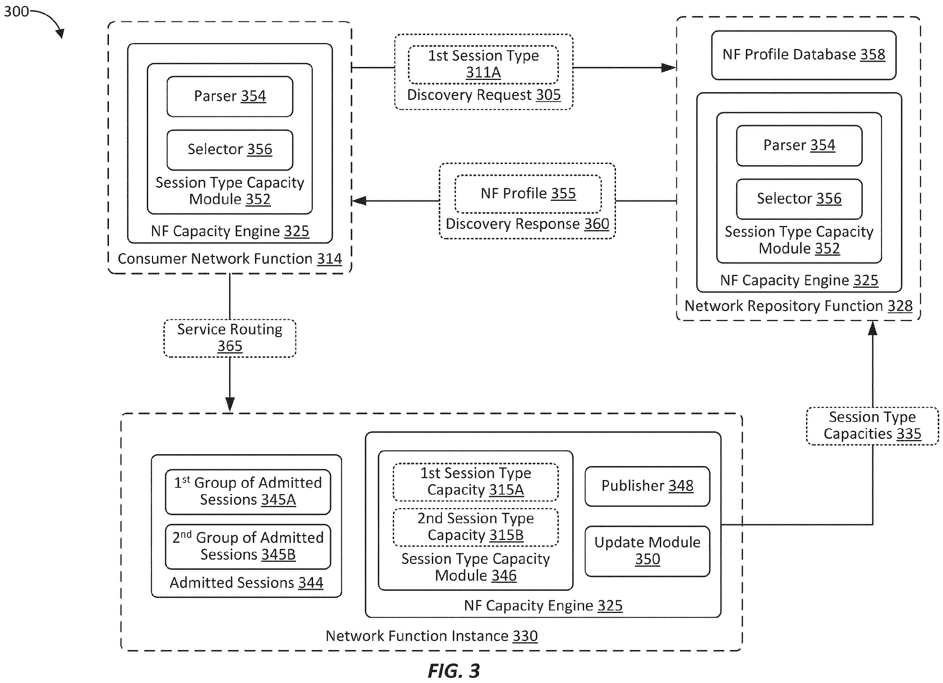

To address at least the above shortcomings of conventional NF capacity frameworks, an example NF capacity engine is provided herein. Referring now to **Figure** 3, an operational environment 300 including an NF capacity engine 325 is illustrated, according to an embodiment herein. As shown, the NF capacity engine 325 may include a consumer-side, a producer-side, and/or an NRF-side. That is, one or more functions of the NF capacity engine 325 may be performed by a consumer NF 314, which may be the same or similar to the SMF 114, one or more functions may be provided by producer NF 330, which may be the same or similar to the PCF 130, while one or more functions may be performed by a NRF 328, which may be the same or similar to the NRF 128. It should be appreciated, that while the following discussion is focused on the illustrated arrangement of the NF capacity engine 325, in some embodiments, one or more of the illustrated components/functions of the NF capacity engine 325 may be arranged differently. For example, in some embodiments, the NF capacity engine 325 may be hosted separately from the consumer NF 314, the producer NF 330, and/or the NRF 328, such as by a third party or another NF.

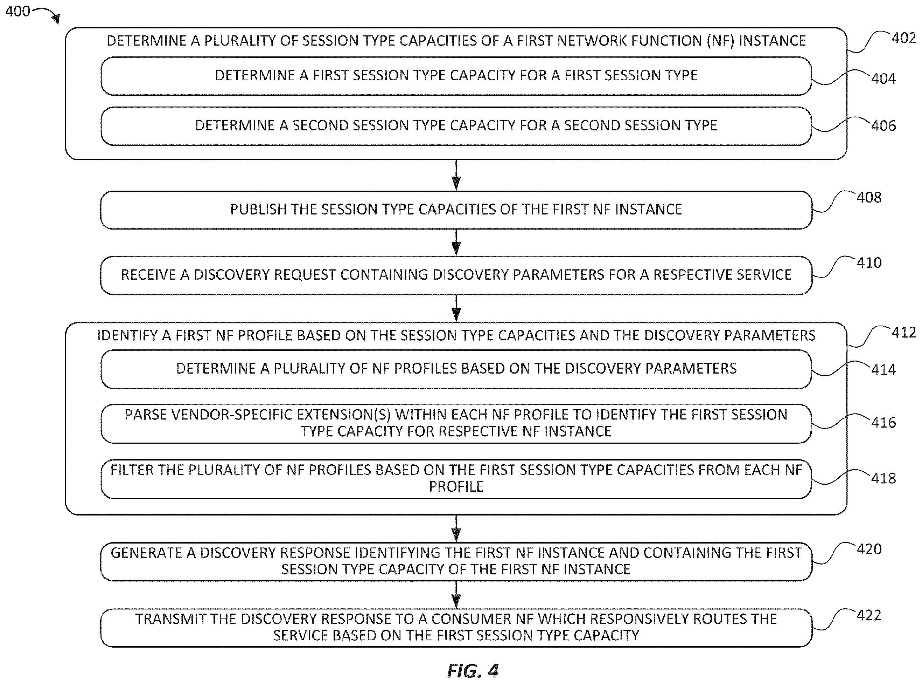

For ease of explanation, Figure 3 is described in conjunction with **Figure 4****,** which provides an example NF capacity engine process, in particular a process 400 for providing the NF capacity engine 325 and one or more of its functions, according to an embodiment herein. In other words, Figure 4 illustrates the process 400 for determining a capacity of a respective producer NF (e.g., NF instance) on a per session type bases and responsively performing NF selection using the determined capacity, according to an embodiment herein. While Figure 4 is described with relation to Figure 3, it should be appreciated that components, elements, and steps from any other Figures described herein may be equally applicable.

With reference to Figure 3, the environment 300 includes the consumer NF 314, a producer NF 330, and a NRF 328. The consumer NF 314 may be a NF that routes service requests/updates, such as the SMF 114. As such, the consumer NF 314 may perform NF selection to identify an appropriate NF for handling specific requests/updates. To support identification of appropriate NFs, the consumer NF 314 communicates with a NRF 328. The NRF 328 acts as a centralized registry for all NFs, maintaining real-time information of respective NF capabilities. As illustrated, the NRF 328 includes a profile database 358 that stores information about registered NFs, including their type, capabilities, supported services, geographical locations, current load status, and capacities.

To ensure that the NRF 328 has the most up-to-date information, the producer NF 330 publishes its capabilities by registering and updating its profile with the NRF 328. The NF profile associated with the producer NF 330 includes static information, such as the NF type, supported services, and geographical location, as well as dynamic information (e.g., information that changes based on current conditions), such as current workloads and capacities. For the dynamic capabilities, such as its current capacity, the producer NF 330 periodically or based on events, updates the NRF 328 to reflect changes in real-time. As will be expanded on in greater detail below, as an NF instance's 330 workload increases or decreases-such as when it admits new sessions or terminates existing ones-the producer NF 330 recalculates its available capacity and communicates the updated metrics to the NRF 328. This enables other consumer NFs, such as the consumer NF 314, to query the NRF 328 and obtain accurate, up-to-date information for efficient NF selection and service routing, ensuring that workloads are balanced and the network operates smoothly.

To compute the current capacity for the producer NF 330, the NF capacity engine 325 determines session type capacities 335 for the producer NF 330 (402). That is, the capacity engine 325 determines the capacity of the producer NF 330 to accept additional sessions based on session type. As used herein, session types relate to the classification of network sessions based on their characteristics, purpose, or resource requirements. For example, session types can include different Data Network Name (DNN) types, such as IMS-based sessions for voice or video communication, which are resource-intensive, versus administrative sessions, which are lightweight and used for network management or signaling. Session types can also correspond to specific network slicing categories, where each slice type is tailored to a unique use case, such as enhanced Mobile Broadband (eMBB), Ultra-Reliable Low-Latency Communication (URLLC), or massive Machine-Type Communication (mMTC). Other session types include IP domain information (in the context of BSF). For ease of illustration, the following discussion focuses on DNN session types, but it should be appreciated that the explanation is equally applicable to other session types.

To determine the session type capacities 335 of the producer NF 330, the NF capacity engine 325 includes a session type capacity module 346. The session type capacity module 346 determines the session type capacities 335 by determining a first session type capacity 315A (404) and a second session type capacity 315B (406). The first session type capacity 315A is determined for a first session type, which may be a DNN type 1 or a slice type 1, and the second session type capacity 315B is determined for a second session type, which may be a DNN type 2 or a slice type 2. While the following discussion involves two session types, the number is limited for ease of explanation and any number of sessions types may be evaluated for the producer NF 330. For example, the session type capacity module 346 may determine 5-6 session type capacities for the producer NF 330 based on the NF instance's 330 configuration.

To determine the first session type capacity 315A and the second session type 315B, the session type capacity module 346 determines a number of admitted sessions 344 currently being handled by the producer NF 330. From the admitted sessions 344, the session type capacity module 346 determines a first group of admitted sessions 345A having the first session type and a second group of admitted sessions 345B having the session type. Based on a number of admitted sessions in the first group 345A and the number of admitted sessions in the second group 345B, the session type capacity module 346 computes the first session type capacity 315A and the second session type capacity 315B.

Once the session type capacities 315A-B are determined, the NF capacity engine 325 publishes the session type capacities 335 of the producer NF 330 (408). In particular, the NF capacity engine 325 includes a publisher 348 that publishes the session type capacities 335, which includes the individual session type capacities 315A-B, of the producer NF 330. To publish the session type capacities 335, the publisher 348 generates one or more vendor-specific extensions within the NFservice profile or NF profile associated with the producer NF 330 to include the session type capacities 315A-B. For example, the publisher 348 generates a vendor-specific extension to indicate the producer NF 330 has the session type capacity 315A for the DNN type 1. As noted above, once the producer NF 330 publishes the session type capacities 335, the NF profile database 358 is updated with the respective information.

Since the number of admitted sessions 344 is dynamic in nature, meaning it continuously fluctuates with the service needs of the network, the producer NF 330 includes an update module 350 that may periodically update the session type capacities 335 of the producer NF 330. In some embodiments, update module 350 may monitor the admitted sessions 344 and compute the session type capacities 315A-B when a threshold number of changes have been met. For example, when the update module 350 determines that 25,000 sessions have been added or deleted from the admitted sessions 344, the update module 350 may compute the session type capacities 335 and publish them via the publisher 348. In some embodiments, the update module 350 may monitor the admitted sessions 344 on a session type basis. For example, the update module 350 may monitor the first group of admitted sessions 345A and the second group of admitted sessions 345B to determine when a threshold number of changes have been made to a respective group. When a threshold number of changes (e.g., 25,000 sessions added/deleted) to a respective group 345A-B, the update module 350 may compute the first session type capacity 315A or second session type capacity 315B, respectively, and publish the update session type capacity 315A-B. In some embodiments, the update module 350 monitors the session changes on a per time period basis, such as whether a threshold number of changes are made within a predefined time period.

As noted above, when the consumer NF 314 leverages the NF profile database 358 for service routing. That is, as illustrated, the consumer NF 314 transmits a discovery request 305 to the NRF 328. As such, the NF capacity engine 325 receives the discovery request 305 from the consumer NF 314 (410). The discovery request 305 includes discovery parameters for a respective service that the NF consumer 314 is looking to route within the network. For example, discovery parameters typically include information such as the desired session type (e.g., a first session type 311A), target NF type, supported features, required attributes (e.g., QoS, priority levels), and any specific constraints or criteria (e.g., geographical location, slice identifiers, or custom vendor-specific requirements) that help identify the most suitable producer NF (e.g., NF instance) for the requested service. As will be described in greater detail below, based on the discovery parameters, in particular the discovery parameter identifying a desired session type, the NF capacity engine 325 identifies optimal NF instances, such as the producer NF 330, that match the discovery request 305.

Responsive to receiving the discovery request 305, the NF capacity engine identifies the NF profile 355 corresponding to the producer NF 330 based on the session type capacities 335 and the discovery parameters (412). To identify the NF profile 355 corresponding to the producer NF 330, the NF capacity engine 325 may initially determine a group of NF profiles based on the discovery parameters (414). For example, the NF capacity engine 325 may query the NF profile database 358 to identify NF profiles meeting the target NF type and other requirements, such as locality, as defined in the discovery parameters. Once a group of NF profiles meeting these requirements are identified, the NF capacity engine 325 may determine which of the NF profiles include session type capacities to meet the requested session type. As illustrated, the discovery request 305 requests services for a first session type 311A. As such, the NF capacity engine 325 parses NF profiles to identify NF profiles having first session type capacity 315A. In an example, if the discovery parameters indicate that the requested session is for a DNN type 1 session, then the NF capacity engine 325 parses the NF profiles within the identified group to identify NF profiles having session DNN type 1 capacity.

In the illustrated example, the NF capacity engine 325 includes a session type capacity module 352 for identify NF profiles having session type capacities. The session type capacity module 352 includes a parser 354 and a selector 356 for identify and selecting NF profiles meeting the discovery parameters of the discovery request 305. To identify the NF profile 355 of the producer NF 330, the parser 354 parses the vendor-specific extensions within each of the NF profiles identified in the group to determine whether or not a respective NF has the session type capacity 315A for the requested service having the first session type 311A (416). Once parser 354 parses the vendor-specific extensions of the NF profiles, the selector 356 may filter the NF profiles based on the session type capacities of each respective NF profile (418). Upon filtering, the session type capacity module 352 may determine a subset of NF profiles having session type capacities sufficient for the discovery request 305. That is, the session type capacity module 352 identifies NF profiles having the first session type capacity 315A to meet the first session type 311A of the requested service.

In some cases, the session type capacity module 352 may rank the subset of NF profiles having the session type capacities to identify NF profiles having the highest session type capacities for the requested service. Once the NF profiles having the highest session type capacities are identified, the session type capacity module 352 may select the NF profile having the highest session type capacity, or the top few (e.g., 2 or 3) NF profiles having the highest session type capacities, which in the illustrated example includes the NF profile 355 corresponding to the producer NF 330. It should be appreciated that while the above explanation focuses on NF profiles, in some embodiments, the vendor-specific extensions may be updated within a NFservice profile to reflect the session type capacities of a respective NF. As such, the NF capacity engine 325 may parse the NFservice profile instead of the NF profile to identify NFs for handling the requested service.

Once the NF capacity engine 325 identifies the NF profile 355 as having the session type capacity requested in the discovery request 305, the NF capacity engine 325 generates a discovery response 360 to the discovery request 305 (420). In particular, the NF capacity engine 325 generates the discovery response 360 to identify the producer NF 330 and contain the first session type capacity 315A of the producer NF 330. For example, the NF capacity engine 325 at the NRF 328 may update a capacity attribute of the discovery response 360 to reflect the session type capacity 315A of the producer NF 330. When the discovery response 360 is completed, the NRF 328 transmits the discovery response 360 to the consumer NF 314 (422). Upon receipt of the discovery response 360, the consumer NF 314 may responsively perform NF selection based on the NFs identified in the discovery response 360, such as the producer NF 330. In particular, the consumer NF 314 performs service routing based on the first session type capacity 31A identified in the discovery response 360.

In some embodiments, the consumer NF 314 parses the NF profiles to identify the producer NF 330 based on it having the first session type capacity 315A. In such cases, instead of the NRF 328 identifying one or more NF profiles, such as the NF profile 355 containing the specific session type capacities, the NRF 328 identifies a group of NF profiles meeting one or more of the discovery parameters (e.g., target NF type, locality), and provides the NF profiles to the consumer NF 314 as part of the discovery response 360, as illustrated. Once the consumer NF 314 receives the NF profiles, a consumer-side NF capacity engine 325, which also includes a session type capacity module 352, parses the NF profiles to identify the producer NF 330 as having the first session type capacity 315A for the requested service having the first session type 311A, as described above. Once the producer NF 330 is identified and selected for the requested service, the consumer NF 314 performs service routing 365 to route the service to the producer NF 330. Upon service routing 365, the producer NF 330 admits the new session, thereby updating the admitted sessions 344 total and increasing the number of admitted sessions in the first group 345A.

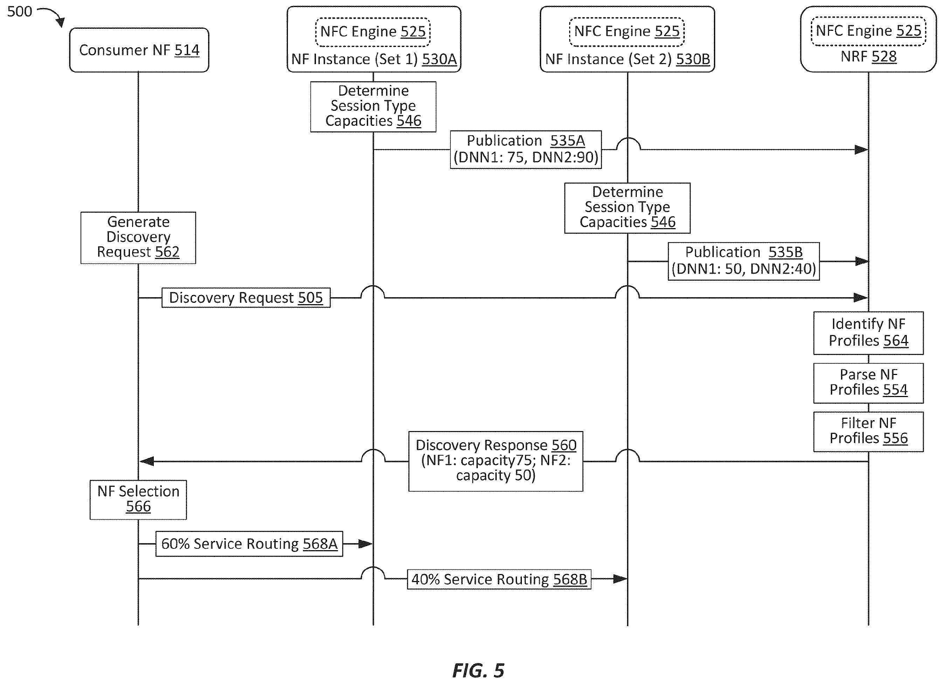

Referring now to **Figure 5****,** an example operational flow 500 showing service routing based on session type capacity is illustrated, according to an embodiment herein. As shown, the operational flow 500 involves two NF instances 530A-B, each of which is part of a separate NF set. Executing on or in operational communication with each of the NF instances 530A-B is a NF capacity (NFC) engine 525 that computes a session type capacity for the NF instances 530A-B (546). For example, the NF capacity engine 525 may determine session type capacities for the NF instance 530A. As described above, this determination involves determining the number of admitted sessions at the NF instance 530A, including the number of admitted sessions having different session types. Then, based on the number of admitted sessions in each group, the NF capacity engine 525 computes the session type capacity for each identified session type handled at the NF instance 530A. In the illustrated example, the NF instance 530A handles two session types: DNN type 1 (DNN1) and DNN type 2 (DNN2).

Once the session type capacities are computed, the NF capacity engine 525 publishes the session type capacities in a publication (535A), such as outlined in NRF management procedures as captured in 29.510 section 5.2.2.3. In the illustrated example, the publication indicates that the NF instance 530A has 75% capacity for DNN type 1 sessions and 90% capacity for DNN type 2 sessions. At the NF instance 530B, the NF capacity engine 525 similarly computes the session type capacities for the NF instance 530B (546) and publishes the session type capacities for the NF instance 530B (535B). As illustrated, the publication indicates that the NF instance 530B has a 50% capacity for DNN type 1 sessions and a 40% capacity for DNN type 2 sessions. As described above, each of these session type capacities may be published as part of vendor-specific extensions either within a respective NF profile or a NFservice profile associated with the NF instances 530A-B. Once published, the respective profiles at a NRF 528 may be updated to reflect the capacities of the NF instances 530A-B.

Within the operational flow 500, a consumer NF 514, which may be a SMF 114, may generate a discovery request to identify NF instances for handling a specific service (562). Once generated, the consumer NF 514 transmits the discovery request to the NRF 528 (505). Responsive to receiving the discovery request, the NRF 528 identifies NF profiles meeting the discovery parameters outlined in the discovery request (564). In particular, the NF capacity engine 525 executing at the NRF 528 or in operational communication with the NRF 528 may identify a group of NF profiles 564 meeting the NF type and locality requirements identified in the discovery request. Once the group of NF profiles is identified, the NF capacity engine 325 parses the NF profiles to identify NF profiles having session type capacity for the requested service (554). As noted above, this may include parsing the vendor-specific extensions with the NF profiles. Once parsed, the NF capacity engine 525 filters the NF profiles based on the session type capacities to identify NF profiles meeting the session type capacity outlined in the discovery parameters (556).

As illustrated, once the NF profiles are filtered and a subset of NF profiles identified for the requested service, the NFC engine 525 generates and sends a discovery response (560) to the consumer NF 514. The discovery response identifies the NF instance for routing the service, along with a respective session type capacity. As shown, the discovery response identifies the NF instance 530A (NF1) as having a 75% capacity for the DNN1 and identifies the NF instance 530B (NF2) as having a 50% capacity for the DNN 1.

Responsive to receiving the discovery response, the consumer NF 514 performs NF selection based on the identified NF instances (566). Then based on the NF selection, the consumer NF 514 performs service routing of the requested service. In the illustrated example, service routing may involve balancing a particular service between the two NF instances 530A-B. For example, the consumer NF 514 routes 60% of the service to the NF instance 530A (568A), while routing 40% of the service to the NF instance 530B (568B). The distribution of service routing between the NF instances 530A-B is based on the respective session type capacities of the NF instances 530A-B. For example, as outlined in the discovery response, the NF instance 530A has a 75% capacity for the DNN type 1 sessions and the NF instance 530B has a 50% capacity for the DNN type 1 sessions. Based on the comparative DNN type 1 session capacities of the NF instances 530A-B (e.g., 75:50), the consumer NF 514 routes 60% of the services to the NF instance 530A and 40% to the NF instance 530B.

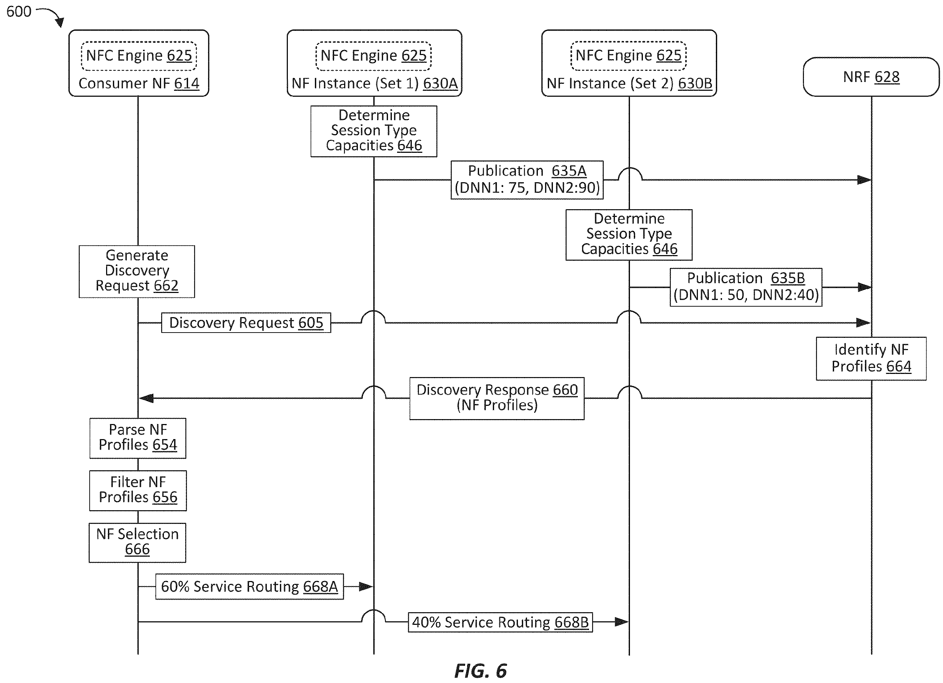

Referring now to **Figure** 6, another example operational flow 600 in which a NF capacity engine 625 is leveraged for service routing is illustrated, according to an embodiment herein. Flow 600 is similar to flow 500 in that it includes NF instances 630A-B, which may be the same or similar to the NF instances 530A-B. Each of the NF instances 630A-B are part of a separate NF set and include an NF capacity engine 625. As such, the NF capacity engine 625 determines the session type capacities for the NF instance 630A (646) and publishes them with an NRF 628 (635A). Similarly, the NF capacity engine 625 determines the session type capacities for the NF instance 630B (646) and publishes them with the NRF 628 (635B).

As illustrated, a consumer NF 614, which may be the same or similar to the consumer NF 514, generates a discovery request for service routing (662) and sends it to the NRF 328 (605). In the operational flow 600, instead of the NRF 628 identifying NF instances appropriate for handling the discovery request 605, the consumer NF 614 performs NF identification and selection. As such, responsive to receiving the discovery request, the NRF 628 identifies NF profiles meeting one or more of the discovery parameters (e.g., locality, NF type) (664). Once identified, the NRF 628 generates a discovery response containing the NF profiles or otherwise indicating the NF profiles (660).

Responsive to receiving the discovery response, a NF capacity engine 625 executing on or in operational communication with the consumer NF 614 parses the NF profiles identified in the response (654). As described above, this may include parsing vendor-specific extensions within a respective NF profile or NFservice profile to determine the session type capacity for a respective NF instance. In some embodiments, once the session type capacities identified in the NF profiles are identified, the NF capacity engine 625 filters the NF profiles to identify NF profiles having sufficient session type capacity to handle the requested service (656). Based on a subset of NF profiles identified by the filtering, the consumer NF 614 performs NF selection (666). Based on the NF selection, the consumer NF 614 performs the service routing, which may include routing the respective sessions selected NF instances. In the illustrated example, this involves balancing the service routing by routing 60% of the requested service to the NF instance 630A (668A) while routing 40% of the requested service to the NF instance 630B based on the respective session type capacities.

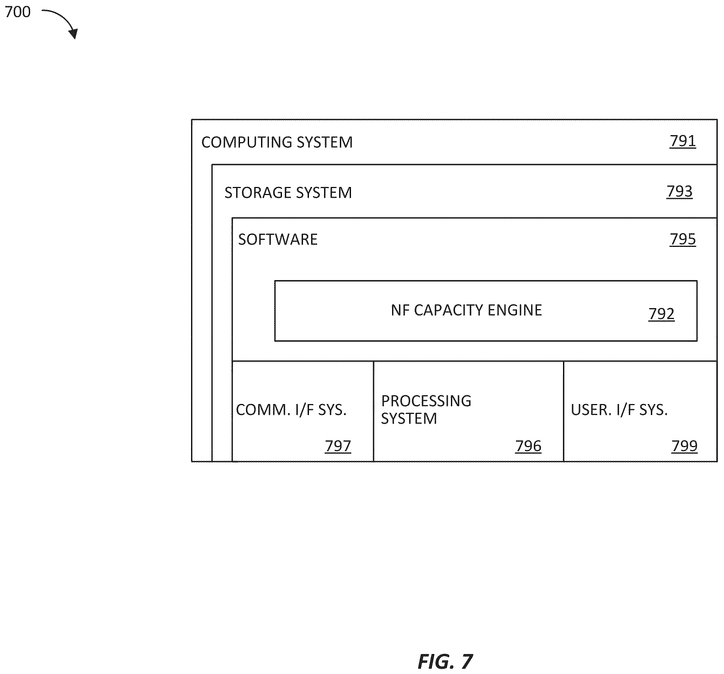

Referring now to **Figure** 7, is a diagram of a system 700 configured to implement an NF capacity engine, according to an embodiment herein. The system 700 may be an example of an apparatus including a computing apparatus 791 that is representative of any system or collection of systems in which the various processes, systems, programs, services, and scenarios disclosed herein may be implemented. For example, computing apparatus 791 may be an example NF capacity engine, such as the NF capacity engine 325/525/625, a producer NF, consumer NF, such as any NFs discussed herein, or any of the subcomponents depicted in the 5G network 100, the operational environment 300, or the operational flows 400, 500, or 600, of Figures 1 and 3-6, respectively. Examples of computing apparatus 791 include, but are not limited to, server computers, desktop computers, laptop computers, routers, switches, web servers, cloud computing platforms, and data center equipment, as well as any other type of physical or virtual server machine, physical or virtual router, container, and any variation or combination thereof.

Computing apparatus 791 may be implemented as a single apparatus, system, or device or may be implemented in a distributed manner as multiple apparatuses, systems, or devices. Computing apparatus 791 may include, but is not limited to, processing system 796, storage system 793, software 795, communication interface system 797, and user interface system 799. Processing system 796 may be operatively coupled with storage system 793, communication interface system 797, and user interface system 799.

Processing system 796 may load and execute software 795 from storage system 793. Software 795 may include an NF capacity engine 792, which may be representative of any of the operations for providing an NF capacity engine or any of its related functions, as discussed with respect to the preceding figures. When executed by processing system 796, software 795 may direct processing system 796 to operate as described herein for at least the various processes, such as the process 400 or any of the operational flows 500-600, operational scenarios, and sequences discussed in the foregoing implementations. Computing apparatus 791 may optionally include additional devices, features, or functionality not discussed for purposes of brevity.

In some embodiments, processing system 796 may comprise a micro-processor and other circuitry that retrieves and executes software 795 from storage system 793. Processing system 796 may be implemented within a single processing device but may also be distributed across multiple processing devices or sub-systems that cooperate in executing program instructions. Examples of processing system 796 may include general purpose central processing units, graphical processing units, application specific processors, and logic devices, as well as any other type of processing device, combinations, or variations thereof.

Storage system 793 may comprise any memory device or computer-readable storage medium readable by processing system 796 and capable of storing software 795. Storage system 793 may include volatile and nonvolatile, removable and non-removable media implemented in any method or technology for storage of information, such as computer readable instructions, data structures, program modules, or other data. Examples of storage media include random access memory, read only memory, magnetic disks, optical disks, optical media, flash memory, virtual memory and non-virtual memory, magnetic cassettes, magnetic tape, magnetic disk storage or other magnetic storage devices, or any other suitable storage media. In no case is the computer-readable storage medium a propagated signal.

In addition to computer-readable storage medium, in some implementations storage system 793 may also include computer readable communication media over which at least some of software 795 may be communicated internally or externally. Storage system 793 may be implemented as a single storage device but may also be implemented across multiple storage devices or sub-systems co-located or distributed relative to each other. Storage system 793 may comprise additional elements, such as a controller, capable of communicating with processing system 796 or possibly other systems.

Software 795 (including the NF capacity engine 792 among other functions) may be implemented in program instructions that may, when executed by processing system 796, direct processing system 796 to operate as described with respect to the various operational scenarios, sequences, and processes illustrated herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 795 may include additional processes, programs, or components, such as operating system software, virtualization software, or other application software. Software 795 may also comprise firmware or some other form of machinereadable processing instructions executable by processing system 796.

In general, software 795 may, when loaded into processing system 796 and executed, transform a suitable apparatus, system, or device (of which computing apparatus 791 is representative) overall from a general-purpose computing system into a special-purpose computing system as described herein. Indeed, encoding software 795 on storage system 793 may transform the physical structure of storage system 793. The specific transformation of the physical structure may depend on various factors in different implementations of this description. Examples of such factors may include, but are not limited to, the technology used to implement the storage media of storage system 793 and whether the computer-storage media are as primary or secondary storage in nature or categorisation, as well as other factors.

For example, if the computer-readable storage medium is implemented as semiconductor-based memory, software 795 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 797 may include communication connections and devices that allow for communication with other computing systems (not shown) over communication networks (not shown). Examples of connections and devices that together allow for inter-system communication may include network interface cards, antennas, power amplifiers, radio-frequency (RF) circuitry, transceivers, and other communication circuitry. The connections and devices may communicate over communication media to exchange communications with other computing systems or networks of systems, such as metal, glass, air, or any other suitable communication media.

Communication between the computing apparatus 791 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof. The aforementioned communication networks and protocols are well known and need not be discussed at length here.

While some examples of methods and systems herein are described in terms of software executing on various machines, the methods and systems may also be implemented as specificallyconfigured hardware, such as field-programmable gate array (FPGA) specifically to execute the various methods according to this disclosure. For example, examples can be implemented in digital electronic circuitry, or in computer hardware, firmware, software, or in a combination thereof. In one example, a device may include a processor or processors. The processor comprises a computer-readable medium, such as a random-access memory (RAM) coupled to the processor. The processor executes computer-executable program instructions stored in memory, such as executing one or more computer programs. Such processors may comprise a microprocessor, a digital signal processor (DSP), an application-specific integrated circuit (ASIC), field programmable gate arrays (FPGAs), and state machines. Such processors may further comprise programmable electronic devices such as programmable logic controllers (PLCs), programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example one or more computer-readable media, which may store and/or provide processor-executable instructions that, when executed by the processor, can cause the processor to perform methods according to this disclosure as carried out, or assisted, by a processor. A computer readable medium m ay be a computer readable storage medium that stores such instructions for access by or provision to processor(s). Computer readable storage media may be referred to as being nontransitory in nature. Examples of computer-readable storage media may include, but are not limited to, an electronic, optical, magnetic, or other storage device capable of providing a processor, such as the processor in a web server, with processor-executable instructions. Other examples of nontransitory computer-readable media include, but are not limited to, a floppy disk, CD-ROM, magnetic disk, memory chip, ROM, RAM, ASIC, configured processor, all optical media, all magnetic tape or other magnetic media, or any other medium from which a computer processor can read. A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems. The processor, and the processing, described may be in one or more structures, and may be dispersed through one or more structures. The processor may comprise code to carry out methods (or parts of methods) according to this disclosure.

As will be appreciated by one skilled in the art, aspects of the presently taught approaches may be embodied as a system, method, computer program product, and other configurable systems. Accordingly, aspects of the presently taught approaches may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the presently taught approaches may take the form of a computer program product embodied in one or more memory devices or computer readable medium(s) having computer readable program code embodied thereon.

The foregoing examples and descriptions are described herein in the context of systems and methods for providing an NF capacity engine or one or more of its related functions. Those of ordinary skill in the art will realize that these descriptions are illustrative only and are not intended to be in any way limiting. Reference is made in detail to implementations of examples as illustrated in the accompanying drawings. The same reference indicators are used throughout the drawings and the description to refer to the same or like items.

In the interest of clarity, not all of the routine features of the examples described herein are shown and described. It will, of course, be appreciated that in the development of any such actual implementation, numerous implementation-specific decisions would be made in order to achieve the developer's specific goals, such as compliance with application- and business-related constraints, and that these specific goals will vary from one implementation to another and from one developer to another. That is, the foregoing description of some examples has been presented only for the purpose of illustration and description and is not intended to be exhaustive or to limit the disclosure to the precise forms disclosed. Numerous modifications and adaptations thereof will be apparent to those skilled in the art without departing from the spirit and scope of the disclosure.

Reference herein to an example or implementation means that a particular feature, structure, operation, or other characteristic described in connection with the example may be included in at least one implementation of the disclosure. The disclosure is not restricted to the particular examples or implementations described as such. The appearance of the phrases "in one example," "in an example," "in an embodiment," or "in an implementation," or variations of the same in various places in the specification does not necessarily refer to the same example or implementation. Any particular feature, structure, operation, or other characteristic described in this specification in relation to one example or implementation may be combined with other features, structures, operations, or other characteristics described in respect of any other example or implementation.

Use herein of the word "or" is intended to cover inclusive and exclusive OR conditions. In other words, A or B or C includes any or all of the following alternative combinations as appropriate for a particular usage: A alone; B alone; C alone; A and B only; A and C only; B and C only; and A and B and C.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words in the above Detailed Description using the singular or plural number may also include the plural or singular number respectively. The word "or," in reference to a list of two or more items, covers all the following interpretations of the word: any of the items in the list, all the items in the list, and any combination of the items in the list.

The above Detailed Description of examples of the technology is not intended to be exhaustive or to limit the technology to the precise form disclosed above. While specific examples for the technology are described above for illustrative purposes, various equivalent modifications are possible within the scope of the technology, as those skilled in the relevant art will recognize. For example, while processes or blocks are presented in a given order, alternative implementations may perform routines having steps, or employ systems having blocks, in a different order, and some processes or blocks may be deleted, moved, added, subdivided, combined, and/or modified to provide alternative or sub combinations. Each of these processes or blocks may be implemented in a variety of different ways. Also, while processes or blocks are at times shown as being performed in series, these processes or blocks may instead be performed or implemented in parallel, or may be performed at different times. Further any specific numbers noted herein are only examples: alternative implementations may employ differing values or ranges.

The teachings of the technology provided herein can be applied to other systems, not necessarily the system described above. The elements and acts of the various examples described above can be combined to provide further implementations of the technology. Some alternative implementations of the technology may include not only additional elements to those implementations noted above, but also may include fewer elements.

To reduce the number of claims, certain aspects of the technology are presented below in certain claim forms, but the applicant contemplates the various aspects of the technology in any number of claim forms. For example, while only one aspect of the technology is recited as a computer-readable medium claim, other aspects may likewise be embodied as a computer-readable medium claim, or in other forms, such as being embodied in a means-plus-function claim. Any claims intended to be treated under 35 U.S.C. § 112(f) will begin with the words "means for" but use of the term "for" in any other context is not intended to invoke treatment under 35 U.S.C. § 112(f). Accordingly, the applicant reserves the right to pursue additional claims after filing this application to pursue such additional claim forms, in either this application or in a continuing application.

Therefore from one perspective, there have been described various approaches for providing a network function (NF) capacity engine. In an example, the NF capacity engine executing on a NF instance, publishes a plurality of session type capacities of the NF instance. The session type capacities include a first session type capacity indicating a storage availability of the NF instance for a first session type and a second session type capacity indicating a storage availability of the NF instance for a second session type. When a network repository function (NRF) receives a discovery request including a plurality of discovery parameters associated with a first session from a consumer NF, the NF capacity engine identifies an NF profile based on the first session type capacity matching the discovery parameters and transmits discovery response identifying the NF instance and containing the first session type capacity to the consumer NF.

### EXAMPLES

These illustrative examples are mentioned not to limit or define the scope of this disclosure, but rather to provide examples to aid understanding thereof. Illustrative examples are discussed above in the Detailed Description, which provides further description. Advantages offered by various examples may be further understood by examining this specification.

As used below, any reference to a series of examples is to be understood as a reference to each of those examples disjunctively (e.g., "Examples 1-4" is to be understood as "Examples 1, 2, 3, or 4").

Example 1 is a computing apparatus comprising: a computer-readable storage medium; processor-executable instructions stored on the computer-readable storage medium; and one or more processors coupled to the computer-readable storage medium and configured to execute the processor-executable instructions to operate a network function (NF) instance within a network, wherein the NF instance comprises a network function (NF) capacity engine, such that the processor-executable instructions, when executed by the one or more processors, direct the computing apparatus, to at least: determine a number of admitted sessions currently on-going at the NF instance; determine a plurality of session type capacities based on the number of admitted sessions, wherein the plurality of session type capacities comprises: a first session type capacity indicating a first storage availability of the NF instance for a first session type; and a second session type capacity indicating a second storage availability of the NF instance for a second session type; and publish the plurality of session type capacities, wherein during subsequent NF selection, the NF instance is selected based on a first session type capacity of the plurality of session type capacities.

Example 2 is the computing apparatus of any previous or subsequent Example, wherein the processor-executable instructions to determine, by the NF capacity engine, the plurality of session type capacities based on the number of admitted sessions, when executed by the one or more processors, further direct the computing apparatus to: determine, by the NF capacity engine, that the admitted sessions currently on-going at the NF instance comprise a first subset of admitted sessions comprising a first session type and a second subset of admitted sessions comprising a second session type; determine, by the NF capacity engine, a first storage capacity for the first session type; determine, by the NF capacity engine, a second storage capacity for the second session type; determine, by the NF capacity engine, the first storage availability of the NF instance based on usage of the first storage capacity by the first subset of admitted sessions; and determine, by the NF capacity engine, the second storage availability of the NF instance based on usage of the second storage capacity by the second subset of admitted sessions.

Example 3 is the computing apparatus of any previous or subsequent Example, wherein the processor-executable instructions to publish, by the NF capacity engine, the plurality of session type capacities, when executed by the one or more processors, further direct the computing apparatus to: modify, by the NF capacity engine, a vendor-specific extension field within a NFservice profile associated with the NF instance to include the plurality of session type capacities.

Example 4 is the computing apparatus of any previous or subsequent Example, wherein the processor-executable instructions, when executed by the one or more processors, further direct the computing apparatus to: determine, by the NF capacity engine, a total number of session changes within a first time period defined by a first time and a second time, wherein the total number of session changes comprises a difference between a number of admitted sessions comprising the first session type between the first time and the second time; compare, by the NF capacity engine, the total number of session changes to a threshold; determine, by the NF capacity engine, that the total number of session changes exceeds the threshold; and publish, by the NF capacity engine, an updated first session type capacity for the NF instance.

Example 5 is the computing apparatus of any previous or subsequent Example, wherein: the plurality of session type capacities corresponds to different types of a session type; the session type comprises Data Network Name (DNN); the first session type comprises a first DNN type; and the second session type comprises a second DNN type.

Example 6 is a method comprising: publishing, by a network function (NF) capacity engine executing on a first NF instance, a plurality of session type capacities, wherein the plurality of session type capacities comprises: a first session type capacity indicating a storage availability of the first NF instance for a first session type; and a second session type capacity indicating a storage availability of the first NF instance for a second session type, wherein the first session type and the second session type comprise different types of the same session attribute; receiving, by a network repository function (NRF), a discovery request comprising a plurality of discovery parameters associated with a first session from a consumer NF; identifying, by the NRF, a first NF profile based on the first session type capacity matching one or more of the discovery parameters; and transmitting, by the NRF, a discovery response identifying the first NF instance and comprising the first session type capacity to the consumer NF.

Example 7 is the method of any previous or subsequent Example, wherein identifying, by the NRF, the first NF profile based on the first session type capacity matching one or more of the discovery parameters comprises: identifying, by the NRF, a plurality of NF profiles based on the plurality of discovery parameters; identifying, by the NRF, a subset of NF profiles within the plurality of NF profiles comprising session type capacities; and modifying, by the NRF, a capacity attribute within the discovery response to include the first session type capacity of the first NF instance.

Example 8 is the method of any previous or subsequent Example, wherein the method further comprises: responsive to receiving the discovery response, selecting, by the consumer NF, the first NF instance for service routing based on the first session type capacity.

Example 9 is the method of any previous or subsequent Example, wherein the method further comprises: determining, by the NF capacity engine, a first total of admitted sessions comprising the first session type; determining, by the NF capacity engine, a second total of admitted sessions comprising the second session type; computing, by the NF capacity engine, the first session type capacity based on the first total; and computing, by the NF capacity engine, the second session type capacity based on the second total.

Example 10 is the method of any previous or subsequent Example, wherein the method further comprises: determining, by the NF capacity engine, a total number of session changes within a first time period defined by a first time and a second time, wherein the total number of session changes comprises a difference between a number of admitted sessions comprising the first session type between the first time and the second time; comparing, by the NF capacity engine, the total number of session changes to a threshold; determining, by the NF capacity engine, that the total number of session changes exceeds the threshold; and publishing, by the NF capacity engine, an updated first session type capacity.

Example 11 is the method of any previous or subsequent Example, wherein: the discovery response: identifies the first NF instance in a first NF set and a second NF instance in a second NF set based on the discovery parameters; and comprises the first session type capacity of the first NF instance and a first session type capacity of the second NF instance; the method further comprises: selecting, by the consumer NF, the first NF instance for routing a portion of a service based on the first session type capacity of the first NF instance; and selecting, by the consumer NF, the second NF instance for routing a second portion of the service based on the first session type capacity of the second NF instance.

Example 12 is the method of any previous or subsequent Example, wherein the first NF instance comprises one of: a Policy Control Function (PCF) instance; a Unified Data Repository (UDR); a Binding Support Function (BSF); or a Session Management Function (SMF).

Example 13 is the method of any previous or subsequent Example, wherein: the plurality of session type capacities corresponds to different types of the same session attribute; the same session attribute comprises network slicing; the first session type comprises a first slice type; and the second session type comprises a second slice type.

Example 14 is a computer-readable storage medium comprising processor-executable instructions, wherein the processor-executable instructions, in part, operate a network repository function (NRF) within a network such to cause one or more processors to: receive, by a NF capacity engine of the NRF, a discovery request from a consumer network function (NF), wherein the discovery request comprises a plurality of discovery parameters for a session; determine, by the NF capacity engine, a first session type from the discovery parameters; identify, by the NF capacity engine, a first NF instance as having capacity to handle the session based on a plurality of session type capacities associated with the first NF instance, wherein the plurality of session type capacities comprises: a first session type capacity indicating a storage availability of the first NF instance for the first session type; and a second session type capacity indicating a storage availability of the first NF instance for a second session type, wherein the first session type and the second session type comprise different types of the same session attribute; and generate, by the NF capacity engine, a discovery response identifying the first NF instance, wherein the discovery response comprises the first session type capacity of the first NF instance.

Example 15 is the computer-readable storage medium of any previous or subsequent Example, wherein the processor-executable instructions cause the one or more processors to further execute processor-executable instructions stored in the computer-readable storage medium to: determine, by the NF capacity engine, a publication from the first NF instance, wherein the publication comprises a plurality of session type capacities of the first NF instance; parse, by the NF capacity engine, a vendor-specific extension within the publication from the first NF instance to identify the plurality of session type capacities; and update, by the NF capacity engine, a first NF profile associated with the first NF instance to include the plurality of session type capacities.

Example 16 is the computer-readable storage medium of any previous or subsequent Example, wherein the processor-executable instructions to identify, by the NF capacity engine, the first NF instance as having capacity to handle the session based on the plurality of session type capacities associated with the first NF instance cause the one or more processors to further execute processor-executable instructions stored in the computer-readable storage medium to: determine, by the NF capacity engine, a plurality of NF profiles based on one or more of the discovery parameters; filter, by the NF capacity engine, the plurality of NF profiles based on the first session type; and identify, by the NF capacity engine, a first NF profile associated with the first NF instance based on the first NF profile comprising the first session type capacity.

Example 17 is the computer-readable storage medium of any previous or subsequent Example, wherein: the processor-executable instructions to determine, by the NF capacity engine, the first session type from the discovery parameters cause the one or more processors to further execute processor-executable instructions stored in the computer-readable storage medium to: determine, by the NF capacity engine, a locality parameter of the session and a first Data Network Name (DNN) type of the session from the discovery parameters; and the processor-executable instructions to identify, by the NF capacity engine, the first NF instance as having capacity to handle the session cause the one or more processors to further execute processor-executable instructions stored in the computer-readable storage medium to: identify, by the NF capacity engine, a plurality of NF profiles meeting the locality parameter of the session; filter, by the NF capacity engine, the plurality of NF profiles based on the first DNN type of the session to identify a subset of NF profiles comprising the first session type capacity; and rank, by the NF capacity engine, subset of NF profiles based on the first session type capacity of each NF profile to identify a first NF profile having the first session type capacity greater than the remaining NF profiles in the subset of NF profiles, wherein the first NF profile corresponds to the first NF instance.

Example 18 is the computer-readable storage medium of any previous or subsequent Example, wherein: the processor-executable instructions cause the one or more processors to further execute processor-executable instructions stored in the computer-readable storage medium to: identify, by the NF capacity engine, a second NF instance as having capacity to handle the session based on a plurality of session type capacities associated with the second NF instance; and the processor-executable instructions to generate, by the NF capacity engine, the discovery response identifying the first NF instance cause the one or more processors to further execute processor-executable instructions stored in the computer-readable storage medium to: generate, by the NF capacity engine, the discovery response to identify: the first NF instance as having the first session type capacity for the first session type; and the second NF instance as having a respective session type capacity for the first session type.

Example 19 is a computer-readable storage medium comprising processor-executable instructions, wherein the processor-executable instructions, in part, operate a consumer network function (NF) within a network such to cause one or more processors to: transmit, by a NF capacity engine of the consumer NF, a discovery request comprising a plurality of discovery parameters; receive, by the NF capacity engine, a discovery response comprising: a first NF profile corresponding to a first NF instance; and a second NF profile corresponding to a second NF instance; determine, by the NF capacity engine, a session type for a requesting service; identify, by the NF capacity engine, a plurality of session type capacities in the first NF profile; determine, by the NF capacity engine, a session type capacity within the plurality of session type capacity for the first NF instance; and select, by the NF capacity engine, the first NF instance for service routing based on the session type capacity of the first NF instance.

Example 20 is the computer-readable storage medium of any previous or subsequent Example, wherein the processor-executable instructions cause the one or more processors to further execute processor-executable instructions stored in the computer-readable storage medium to: determine, by the NF capacity engine, a session type capacity for the second NF instance; and balance, by the NF capacity engine, service routing between the first NF instance and the second NF instance based on the session type capacity of the first NF instance and the session type capacity of the second NF instance.

Example 21 is the computer-readable storage medium of any previous or subsequent Example, wherein: the consumer NF comprises a Session Management Function (SMF); the first NF instance comprises a first Policy Control Function (PCF) instance; the second NF instance comprises a second PCF instance; and the first PCF instance and the second PCF instance are part of different PCF sets.

Example 22 is the computer-readable storage medium of any previous or subsequent Example, wherein the processor-executable instructions to identify, by the NF capacity engine, the plurality of session type capacities in the first NF profile cause the one or more processors to further execute processor-executable instructions stored in the computer-readable storage medium to: parse, by the NF capacity engine, one or more vendor-specific extensions within the first NF profile associated with the first NF instance; and identify, by the NF capacity engine, the plurality of session type capacities from the one or more vendor-specific extensions within the first NF profile.

Further examples of feature combinations taught by the present disclosure are set out in the following numbered clauses.

Clause 1. A computing apparatus comprising: a computer-readable storage medium; processor-executable instructions stored on the computer-readable storage medium; and one or more processors coupled to the computer-readable storage medium and configured to execute the processor-executable instructions to operate a network function (NF) instance within a network, wherein the NF instance comprises a network function (NF) capacity engine, such that the processor-executable instructions, when executed by the one or more processors, direct the computing apparatus, to at least: determine a number of admitted sessions currently on-going at the NF instance; determine a plurality of session type capacities based on the number of admitted sessions, wherein the plurality of session type capacities comprises: a first session type capacity indicating a first storage availability of the NF instance for a first session type; and a second session type capacity indicating a second storage availability of the NF instance for a second session type; and publish the plurality of session type capacities, wherein during subsequent NF selection, the NF instance is selected based on a first session type capacity of the plurality of session type capacities.

Clause 2. The computing apparatus of clause 1, wherein the processor-executable instructions to determine, by the NF capacity engine, the plurality of session type capacities based on the number of admitted sessions, when executed by the one or more processors, further direct the computing apparatus to: determine, by the NF capacity engine, that the admitted sessions currently on-going at the NF instance comprise a first subset of admitted sessions comprising a first session type and a second subset of admitted sessions comprising a second session type; determine, by the NF capacity engine, a first storage capacity for the first session type; determine, by the NF capacity engine, a second storage capacity for the second session type; determine, by the NF capacity engine, the first storage availability of the NF instance based on usage of the first storage capacity by the first subset of admitted sessions; and determine, by the NF capacity engine, the second storage availability of the NF instance based on usage of the second storage capacity by the second subset of admitted sessions.

Clause 3. The computing apparatus of clause 1 or 2, wherein the processor-executable instructions to publish, by the NF capacity engine, the plurality of session type capacities, when executed by the one or more processors, further direct the computing apparatus to: modify, by the NF capacity engine, a vendor-specific extension field within a NFservice profile associated with the NF instance to include the plurality of session type capacities.

Clause 4. The computing apparatus of clause 1, 2 or 3, wherein the processor-executable instructions, when executed by the one or more processors, further direct the computing apparatus to: determine, by the NF capacity engine, a total number of session changes within a first time period defined by a first time and a second time, wherein the total number of session changes comprises a difference between a number of admitted sessions comprising the first session type between the first time and the second time; compare, by the NF capacity engine, the total number of session changes to a threshold; determine, by the NF capacity engine, that the total number of session changes exceeds the threshold; and publish, by the NF capacity engine, an updated first session type capacity for the NF instance.

Clause 5. The computing apparatus of any preceding clause, wherein: the plurality of session type capacities corresponds to different types of a session type; the session type comprises Data Network Name (DNN); the first session type comprises a first DNN type; and the second session type comprises a second DNN type.

Clause 6. A method comprising: publishing, by a network function (NF) capacity engine executing on a first NF instance, a plurality of session type capacities, wherein the plurality of session type capacities comprises: a first session type capacity indicating a storage availability of the first NF instance for a first session type; and a second session type capacity indicating a storage availability of the first NF instance for a second session type, wherein the first session type and the second session type comprise different types of the same session attribute; receiving, by a network repository function (NRF), a discovery request comprising a plurality of discovery parameters associated with a first session from a consumer NF; identifying, by the NRF, a first NF profile based on the first session type capacity matching one or more of the discovery parameters; and transmitting, by the NRF, a discovery response identifying the first NF instance and comprising the first session type capacity to the consumer NF.

Clause 7. The method of clause 6, wherein identifying, by the NRF, the first NF profile based on the first session type capacity matching one or more of the discovery parameters comprises: identifying, by the NRF, a plurality of NF profiles based on the plurality of discovery parameters; identifying, by the NRF, a subset of NF profiles within the plurality of NF profiles comprising session type capacities; and modifying, by the NRF, a capacity attribute within the discovery response to include the first session type capacity of the first NF instance.

Clause 8. The method of clause 6 or 7, wherein the method further comprises: responsive to receiving the discovery response, selecting, by the consumer NF, the first NF instance for service routing based on the first session type capacity.

Clause 9. The method of clause 6, 7 or 8, wherein the method further comprises: determining, by the NF capacity engine, a first total of admitted sessions comprising the first session type; determining, by the NF capacity engine, a second total of admitted sessions comprising the second session type; computing, by the NF capacity engine, the first session type capacity based on the first total; and computing, by the NF capacity engine, the second session type capacity based on the second total.

Clause 10. The method of any of clause 6 to 9, wherein the method further comprises: determining, by the NF capacity engine, a total number of session changes within a first time period defined by a first time and a second time, wherein the total number of session changes comprises a difference between a number of admitted sessions comprising the first session type between the first time and the second time; comparing, by the NF capacity engine, the total number of session changes to a threshold; determining, by the NF capacity engine, that the total number of session changes exceeds the threshold; and publishing, by the NF capacity engine, an updated first session type capacity.

Clause 11. The method of any of clauses 6 to 10, wherein: the discovery response: identifies the first NF instance in a first NF set and a second NF instance in a second NF set based on the discovery parameters; and comprises the first session type capacity of the first NF instance and a first session type capacity of the second NF instance; the method further comprises: selecting, by the consumer NF, the first NF instance for routing a portion of a service based on the first session type capacity of the first NF instance; and selecting, by the consumer NF, the second NF instance for routing a second portion of the service based on the first session type capacity of the second NF instance.

Clause 12. The method of any of clauses 6 to 11, wherein the first NF instance comprises one of: a Policy Control Function (PCF) instance; a Unified Data Repository (UDR); a Binding Support Function (BSF); or a Session Management Function (SMF).

Clause 13. The method of any of clauses 6 to 12, wherein: the plurality of session type capacities corresponds to different types of the same session attribute; the same session attribute comprises network slicing; the first session type comprises a first slice type; and the second session type comprises a second slice type.

Clause 14. A computer-readable medium comprising processor-executable instructions, wherein the processor-executable instructions, in part, operate a network repository function (NRF) within a network such to cause one or more processors to: receive, by a NF capacity engine of the NRF, a discovery request from a consumer network function (NF), wherein the discovery request comprises a plurality of discovery parameters for a session; determine, by the NF capacity engine, a first session type from the discovery parameters; identify, by the NF capacity engine, a first NF instance as having capacity to handle the session based on a plurality of session type capacities associated with the first NF instance, wherein the plurality of session type capacities comprises: a first session type capacity indicating a storage availability of the first NF instance for the first session type; and a second session type capacity indicating a storage availability of the first NF instance for a second session type, wherein the first session type and the second session type comprise different types of the same session attribute; and generate, by the NF capacity engine, a discovery response identifying the first NF instance, wherein the discovery response comprises the first session type capacity of the first NF instance.

Clause 15. The computer-readable medium of clause 14, wherein the processor-executable instructions cause the one or more processors to further execute processor-executable instructions comprised in the computer-readable medium to: determine, by the NF capacity engine, a publication from the first NF instance, wherein the publication comprises a plurality of session type capacities of the first NF instance; parse, by the NF capacity engine, a vendor-specific extension within the publication from the first NF instance to identify the plurality of session type capacities; and update, by the NF capacity engine, a first NF profile associated with the first NF instance to include the plurality of session type capacities.

Clause 16. The computer-readable medium of clause 14 or 15, wherein the processor-executable instructions to identify, by the NF capacity engine, the first NF instance as having capacity to handle the session based on the plurality of session type capacities associated with the first NF instance cause the one or more processors to further execute processor-executable instructions comprised in the computer-readable medium to: determine, by the NF capacity engine, a plurality of NF profiles based on one or more of the discovery parameters; filter, by the NF capacity engine, the plurality of NF profiles based on the first session type; and identify, by the NF capacity engine, a first NF profile associated with the first NF instance based on the first NF profile comprising the first session type capacity.

Clause 17. The computer-readable medium of clause 14, 15 or 16, wherein: the processor-executable instructions to determine, by the NF capacity engine, the first session type from the discovery parameters cause the one or more processors to further execute processor-executable instructions comprised in the computer-readable medium to: determine, by the NF capacity engine, a locality parameter of the session and a first Data Network Name (DNN) type of the session from the discovery parameters; and the processor-executable instructions to identify, by the NF capacity engine, the first NF instance as having capacity to handle the session cause the one or more processors to further execute processor-executable instructions comprised in the computer-readable medium to: identify, by the NF capacity engine, a plurality of NF profiles meeting the locality parameter of the session; filter, by the NF capacity engine, the plurality of NF profiles based on the first DNN type of the session to identify a subset of NF profiles comprising the first session type capacity; and rank, by the NF capacity engine, subset of NF profiles based on the first session type capacity of each NF profile to identify a first NF profile having the first session type capacity greater than the remaining NF profiles in the subset of NF profiles, wherein the first NF profile corresponds to the first NF instance.

Clause 18. The computer-readable medium of any of clauses 14 to 17, wherein: the processor-executable instructions cause the one or more processors to further execute processor-executable instructions comprised in the computer-readable medium to: identify, by the NF capacity engine, a second NF instance as having capacity to handle the session based on a plurality of session type capacities associated with the second NF instance; and the processor-executable instructions to generate, by the NF capacity engine, the discovery response identifying the first NF instance cause the one or more processors to further execute processor-executable instructions comprised in the computer-readable medium to: generate, by the NF capacity engine, the discovery response to identify: the first NF instance as having the first session type capacity for the first session type; and the second NF instance as having a respective session type capacity for the first session type.

Clause 19. A computer-readable medium comprising processor-executable instructions, wherein the processor-executable instructions, in part, operate a consumer network function (NF) within a network such to cause one or more processors to: transmit, by a NF capacity engine of the consumer NF, a discovery request comprising a plurality of discovery parameters; receive, by the NF capacity engine, a discovery response comprising: a first NF profile corresponding to a first NF instance; and a second NF profile corresponding to a second NF instance; determine, by the NF capacity engine, a session type for a requesting service; identify, by the NF capacity engine, a plurality of session type capacities in the first NF profile; determine, by the NF capacity engine, a session type capacity within the plurality of session type capacity for the first NF instance; and select, by the NF capacity engine, the first NF instance for service routing based on the session type capacity of the first NF instance.

Clause 20. The computer-readable medium of clause 19, wherein the processor-executable instructions cause the one or more processors to further execute processor-executable instructions comprised in the computer-readable medium to: determine, by the NF capacity engine, a session type capacity for the second NF instance; and balance, by the NF capacity engine, service routing between the first NF instance and the second NF instance based on the session type capacity of the first NF instance and the session type capacity of the second NF instance.

Clause 21. The computer-readable medium of clause 20, wherein: the consumer NF comprises a Session Management Function (SMF); the first NF instance comprises a first Policy Control Function (PCF) instance; the second NF instance comprises a second PCF instance; and the first PCF instance and the second PCF instance are part of different PCF sets.

Clause 22. The computer-readable medium of clause 19, 20 or 21, wherein the processor-executable instructions to identify, by the NF capacity engine, the plurality of session type capacities in the first NF profile cause the one or more processors to further execute processor-executable instructions comprised in the computer-readable medium to: parse, by the NF capacity engine, one or more vendor-specific extensions within the first NF profile associated with the first NF instance; and identify, by the NF capacity engine, the plurality of session type capacities from the one or more vendor-specific extensions within the first NF profile.

## Claims

1. A computing apparatus comprising:
a computer-readable storage medium;
processor-executable instructions stored on the computer-readable storage medium; and
one or more processors coupled to the computer-readable storage medium and configured to execute the processor-executable instructions to operate a network function (NF) instance within a network, wherein the NF instance comprises a network function (NF) capacity engine, such that the processor-executable instructions, when executed by the one or more processors, direct the computing apparatus, to at least:
determine a number of admitted sessions currently on-going at the NF instance;
determine a plurality of session type capacities based on the number of admitted sessions, wherein the plurality of session type capacities comprises:
a first session type capacity indicating a first storage availability of the NF instance for a first session type; and
a second session type capacity indicating a second storage availability of the NF instance for a second session type; and
publish the plurality of session type capacities, wherein during subsequent NF selection, the NF instance is selected based on a first session type capacity of the plurality of session type capacities.

2. The computing apparatus of claim 1, wherein the processor-executable instructions to determine, by the NF capacity engine, the plurality of session type capacities based on the number of admitted sessions, when executed by the one or more processors, further direct the computing apparatus to:
determine, by the NF capacity engine, that the admitted sessions currently on-going at the NF instance comprise a first subset of admitted sessions comprising a first session type and a second subset of admitted sessions comprising a second session type;
determine, by the NF capacity engine, a first storage capacity for the first session type;
determine, by the NF capacity engine, a second storage capacity for the second session type;
determine, by the NF capacity engine, the first storage availability of the NF instance based on usage of the first storage capacity by the first subset of admitted sessions; and
determine, by the NF capacity engine, the second storage availability of the NF instance based on usage of the second storage capacity by the second subset of admitted sessions.

3. The computing apparatus of claim 1 or 2, wherein the processor-executable instructions to publish, by the NF capacity engine, the plurality of session type capacities, when executed by the one or more processors, further direct the computing apparatus to:
modify, by the NF capacity engine, a vendor-specific extension field within a NFservice profile associated with the NF instance to include the plurality of session type capacities.

4. The computing apparatus of claim 1, 2 or 3, wherein the processor-executable instructions, when executed by the one or more processors, further direct the computing apparatus to:
determine, by the NF capacity engine, a total number of session changes within a first time period defined by a first time and a second time, wherein the total number of session changes comprises a difference between a number of admitted sessions comprising the first session type between the first time and the second time;
compare, by the NF capacity engine, the total number of session changes to a threshold;
determine, by the NF capacity engine, that the total number of session changes exceeds the threshold; and
publish, by the NF capacity engine, an updated first session type capacity for the NF instance.

5. A method comprising:
publishing, by a network function (NF) capacity engine executing on a first NF instance, a plurality of session type capacities, wherein the plurality of session type capacities comprises:
a first session type capacity indicating a storage availability of the first NF instance for a first session type; and
a second session type capacity indicating a storage availability of the first NF instance for a second session type,
wherein the first session type and the second session type comprise different types of the same session attribute;
receiving, by a network repository function (NRF), a discovery request comprising a plurality of discovery parameters associated with a first session from a consumer NF;
identifying, by the NRF, a first NF profile based on the first session type capacity matching one or more of the discovery parameters; and
transmitting, by the NRF, a discovery response identifying the first NF instance and comprising the first session type capacity to the consumer NF.

6. The method of claim 5, wherein identifying, by the NRF, the first NF profile based on the first session type capacity matching one or more of the discovery parameters comprises:
identifying, by the NRF, a plurality of NF profiles based on the plurality of discovery parameters;
identifying, by the NRF, a subset of NF profiles within the plurality of NF profiles comprising session type capacities; and
modifying, by the NRF, a capacity attribute within the discovery response to include the first session type capacity of the first NF instance.

7. The method of claim 5 or 6, wherein the method further comprises one or more selected from the group comprising:
responsive to receiving the discovery response, selecting, by the consumer NF, the first NF instance for service routing based on the first session type capacity;
determining, by the NF capacity engine, a first total of admitted sessions comprising the first session type; determining, by the NF capacity engine, a second total of admitted sessions comprising the second session type; computing, by the NF capacity engine, the first session type capacity based on the first total; and computing, by the NF capacity engine, the second session type capacity based on the second total; and
determining, by the NF capacity engine, a total number of session changes within a first time period defined by a first time and a second time, wherein the total number of session changes comprises a difference between a number of admitted sessions comprising the first session type between the first time and the second time; comparing, by the NF capacity engine, the total number of session changes to a threshold; determining, by the NF capacity engine, that the total number of session changes exceeds the threshold; and publishing, by the NF capacity engine, an updated first session type capacity.

8. The method of any of claims 5 to 7, wherein:
the discovery response:
identifies the first NF instance in a first NF set and a second NF instance in a second NF set based on the discovery parameters; and
comprises the first session type capacity of the first NF instance and a first session type capacity of the second NF instance;
the method further comprises:
selecting, by the consumer NF, the first NF instance for routing a portion of a service based on the first session type capacity of the first NF instance; and
selecting, by the consumer NF, the second NF instance for routing a second portion of the service based on the first session type capacity of the second NF instance.

9. A computer-readable medium comprising processor-executable instructions, wherein the processor-executable instructions, in part, operate a network repository function (NRF) within a network such to cause one or more processors to:
receive, by a NF capacity engine of the NRF, a discovery request from a consumer network function (NF), wherein the discovery request comprises a plurality of discovery parameters for a session;
determine, by the NF capacity engine, a first session type from the discovery parameters;
identify, by the NF capacity engine, a first NF instance as having capacity to handle the session based on a plurality of session type capacities associated with the first NF instance, wherein the plurality of session type capacities comprises:
a first session type capacity indicating a storage availability of the first NF instance for the first session type; and
a second session type capacity indicating a storage availability of the first NF instance for a second session type,
wherein the first session type and the second session type comprise different types of the same session attribute; and
generate, by the NF capacity engine, a discovery response identifying the first NF instance, wherein the discovery response comprises the first session type capacity of the first NF instance.

10. The computer-readable medium of claim 9, wherein the processor-executable instructions cause the one or more processors to further execute processor-executable instructions comprised in the computer-readable medium to perform one or more selected from the group comprising:
determine, by the NF capacity engine, a publication from the first NF instance, wherein the publication comprises a plurality of session type capacities of the first NF instance; parse, by the NF capacity engine, a vendor-specific extension within the publication from the first NF instance to identify the plurality of session type capacities; and update, by the NF capacity engine, a first NF profile associated with the first NF instance to include the plurality of session type capacities; and
identify, by the NF capacity engine, a second NF instance as having capacity to handle the session based on a plurality of session type capacities associated with the second NF instance; wherein the processor-executable instructions to generate, by the NF capacity engine, the discovery response identifying the first NF instance cause the one or more processors to further execute processor-executable instructions comprised in the computer-readable medium to: generate, by the NF capacity engine, the discovery response to identify: the first NF instance as having the first session type capacity for the first session type; and the second NF instance as having a respective session type capacity for the first session type.

11. The computer-readable medium of claim 9 or 10, wherein the processor-executable instructions to identify, by the NF capacity engine, the first NF instance as having capacity to handle the session based on the plurality of session type capacities associated with the first NF instance cause the one or more processors to further execute processor-executable instructions comprised in the computer-readable medium to:
determine, by the NF capacity engine, a plurality of NF profiles based on one or more of the discovery parameters;
filter, by the NF capacity engine, the plurality of NF profiles based on the first session type; and
identify, by the NF capacity engine, a first NF profile associated with the first NF instance based on the first NF profile comprising the first session type capacity.

12. The computer-readable medium of claim 9, 10 or 11, wherein:
the processor-executable instructions to determine, by the NF capacity engine, the first session type from the discovery parameters cause the one or more processors to further execute processor-executable instructions comprised in the computer-readable medium to:
determine, by the NF capacity engine, a locality parameter of the session and a first Data Network Name (DNN) type of the session from the discovery parameters; and
the processor-executable instructions to identify, by the NF capacity engine, the first NF instance as having capacity to handle the session cause the one or more processors to further execute processor-executable instructions comprised in the computer-readable medium to:
identify, by the NF capacity engine, a plurality of NF profiles meeting the locality parameter of the session;
filter, by the NF capacity engine, the plurality of NF profiles based on the first DNN type of the session to identify a subset of NF profiles comprising the first session type capacity; and
rank, by the NF capacity engine, subset of NF profiles based on the first session type capacity of each NF profile to identify a first NF profile having the first session type capacity greater than the remaining NF profiles in the subset of NF profiles, wherein the first NF profile corresponds to the first NF instance.

13. A computer-readable medium comprising processor-executable instructions, wherein the processor-executable instructions, in part, operate a consumer network function (NF) within a network such to cause one or more processors to:
transmit, by a NF capacity engine of the consumer NF, a discovery request comprising a plurality of discovery parameters;
receive, by the NF capacity engine, a discovery response comprising:
a first NF profile corresponding to a first NF instance; and
a second NF profile corresponding to a second NF instance;
determine, by the NF capacity engine, a session type for a requesting service;
identify, by the NF capacity engine, a plurality of session type capacities in the first NF profile;
determine, by the NF capacity engine, a session type capacity within the plurality of session type capacity for the first NF instance; and
select, by the NF capacity engine, the first NF instance for service routing based on the session type capacity of the first NF instance.

14. The computer-readable medium of claim 13, wherein the processor-executable instructions cause the one or more processors to further execute processor-executable instructions comprised in the computer-readable medium to:
determine, by the NF capacity engine, a session type capacity for the second NF instance; and
balance, by the NF capacity engine, service routing between the first NF instance and the second NF instance based on the session type capacity of the first NF instance and the session type capacity of the second NF instance.

15. The computer-readable medium of claim 13 or 14, wherein the processor-executable instructions to identify, by the NF capacity engine, the plurality of session type capacities in the first NF profile cause the one or more processors to further execute processor-executable instructions comprised in the computer-readable medium to:
parse, by the NF capacity engine, one or more vendor-specific extensions within the first NF profile associated with the first NF instance; and
identify, by the NF capacity engine, the plurality of session type capacities from the one or more vendor-specific extensions within the first NF profile.
